(19) **Europäisches Patentamt / European Patent Office / Office européen des brevets**

(11) **EP 1 973 236 A1**

(12) **EUROPEAN PATENT APPLICATION**

(43) Date of publication:
24.09.2008 Bulletin 2008/39

(51) Int Cl.:
*H04B 5/02* (2006.01)    *H04B 17/00* (2006.01)
*G06K 7/00* (2006.01)

(21) Application number: 07005789.8

(22) Date of filing: 21.03.2007

(84) Designated Contracting States:
AT BE BG CH CY CZ DE DK EE ES FI FR GB GR
HU IE IS IT LI LT LU LV MC MT NL PL PT RO SE
SI SK TR
Designated Extension States:
AL BA HR MK RS

(71) Applicant: Ingecom Sàrl
2525 Le Landeron (CH)

(72) Inventor: Desjeux, Oliver
2525 Le Landeron (CH)

(74) Representative: Kley, Hansjörg
Siemens AG
Postfach 22 16 34
80506 München (DE)

(54) **Method to determine a field strength by a reader for telemetry units**

(57) The present invention discloses a method and a passive tag ($P_{tag}$) to make a distance d detection of a radio telemetry unit, typically an RFID active tag or passive tag ($P_{tag}$), without having the possibility to measure the incoming amplitude of power at the reader (A, B, C). The telemetry unit of a tag ($P_{tag}$) sends a sequence (1, 1', 1", ..) of steps (3) together with its value of amplitude (A1, A2, ..) and data (D) to be transmitted to the reader (A, B, C). The reader (A, B, C) decodes the first understandable part of the sequence (3) to determine the amplitude (An) of the power required by the telemetry unit to be in range of the reader (A, B, C), and therefore can deduct a distance d.

FIG 2

EP 1 973 236 A1

**Description**

This invention relates to a method to determine a field strength by a reader for telemetry units such as active or passive tags according to the preamble of claim 1.

The present invention covers the field of portable RFID-devices as active tags or passive tags. A typical RFID-System is disclosed in WO 1996/028941 A1 [1], especially of «active tags». The present invention covers also the implementation on passive tags, especially on UHF tags where very long distance of communication can be achieved, and thus, determining the distance from tag to reader may be a very useful information.

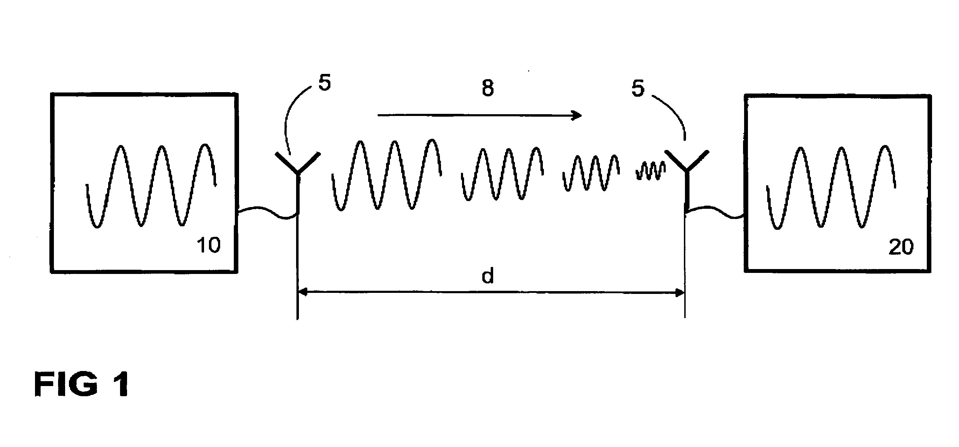

Many applications involving the usage of telemetry require having information of distance to the reader from which it is in sight in order to provide some means for localization. In the radio-frequency domain, the distance information is an image of the amplitude of the electrical field received. The path loss, or attenuation needs to be calculated differently in open space or in confined environment. The involved principle is depicted in figure 1. This attenuation or Free space loss is calculated using the following formula:

$$A = (-27.6) + 20 \cdot \text{Log } f + 20 \cdot \text{Log } d$$

where

- A is the free space loss, in [dB];
- f is the RF frequency in [MHz];
- d is the distance between the transmitting and receiving antennas in meter [m].

At f = 2.4 GHz, the above mentioned formula becomes to

$$A = 40 + 20 \cdot \text{Log } d$$

When the RF signal passes through solid objects, some of the signal power is absorbed. The most convenient way to express this is by adding an allowed loss to the Free Space loss.

Attenuation can vary greatly depending upon the structure of the object the signal is passing through. Metal or concrete in the barrier greatly increases the attenuation. Walls account for 10 to 15 dB depending upon the construction. Interior walls are on the low end and exterior walls create more loss. Floors of buildings account typically for an extra 12 to 27 dB of loss.

Considering a transmission at 2.4 GHz, the attenuation in building typically becomes

$$A = 40 + 10 \cdot n \cdot \text{Log } d + (\text{Structure Loss})$$

where n is a factor to model the effect of scattering.

The scattering effect comes when the radiation is forced to deviate from its direct trajectory due to non-uniformities of the medium through which it passes. RF scattering involves some change in the energy of the radiation. The n factor is very difficult to predict and may vary substantially in the real life due to the physical modification of the area in which the radio transmission takes place such as movement of people, movement of objects.

In the case of confined areas the multipath of the travelling wave is much more difficult to predict. Several models are available, typically like the Rayleigh model. The purpose of this invention is to provide an image of the distance by knowing the value of the amplitude of the field received on the receiving section. This information is often abbreviated by the term RSSI, for Received Signal Strength Indication. The state of the art to provide the RSSI on the receiver of the reader is typically a diode detector connected on the analogue intermediate frequency signal. In some cases the chipset used to make the receiver of the reader doesn't provide either the RSSI or the analogue intermediate frequency. Therefore, building a field detector implies to use extra hardware on the RF section of the receiver in order to get this information. Building an RSSI on the RF section of the receiver is a difficult operation that may alter the performance of the overall system.

The object of the present invention is to overcome the problems presented by the above cited devices to provide a method to determine a field strength by a reader without having extra hardware on its radio section.

This object is solved by a method with the steps specified in claim 1 and a tag specified with the features given in claim 7.

Further advantageous embodiments are given in dependant claims.

One of the main applications and use of this method is for the distance detection/distance deduction/distance measuring of tags. Passive tags can also benefit from this invention.

Another application, immediately derived, is the localization of tags. The purpose of this invention is to localize mobile tags inside a confined area.

The invention will be now described in a preferred embodiment with reference to the accompanying drawings wherein:

Figure 1    Situation of a typical path loss between transmitter/tag and receiver/reader;

Figure 2    principle of a step transmission sent by a tag;

Figure 3    Simplified representation of a circuitry enabling different output powers for an active tag;

Figure 4    Simplified representation of a circuitry according to the state of the art for a passive tag;

Figure 5    Simplified representation of a circuitry enabling different output powers according to the invention for a passive tag;

Figure 6    involved components for detection of a position.

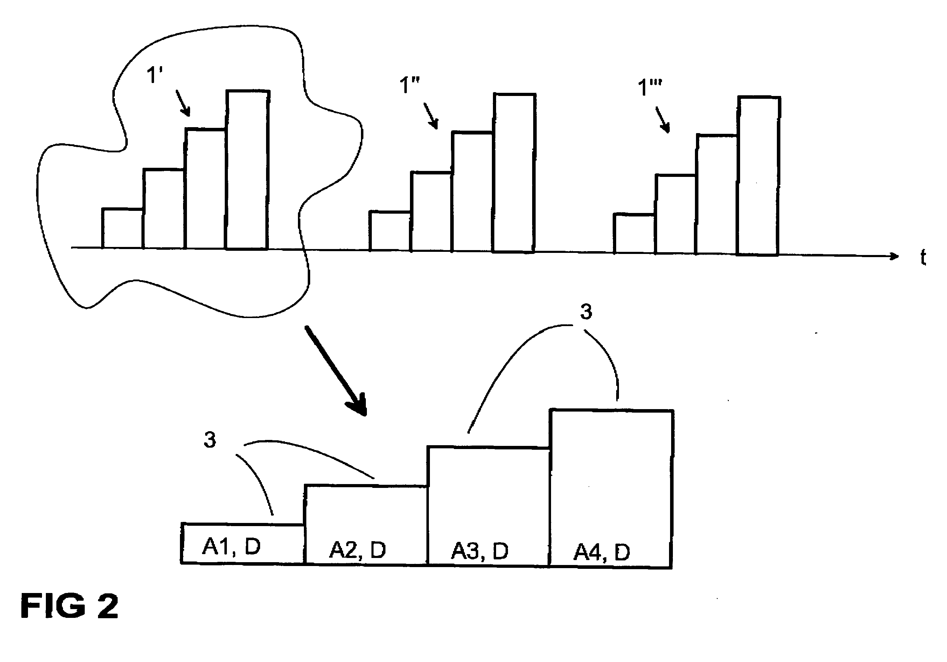

The telemetry unit, i.e. the transmission section of a tag, is sending a message with different amplitudes in its frame. This transmission with different amplitudes is called a step transmission or transmission in form of a step function. An example of this transmission is depicted in figure 2. Each of the portions or in this paper called steps 3 of the frame 1', 1" or 1''' has a different amplitude. Within one frame the amplitude of the sequence of steps 3 is strongly increasing. The value of the amplitude A1, A2, A3, A4 sent is digitally coded inside the corresponding step 3 of the frame 1, together with the data D to be sent, see the representation in the lower part of figure 2. The data D is therefore repeated by the number of steps 3 included inside the step sequence. The number of steps 3 of one frame is not limited to the value 4 given in figure 2. The amplitude and the Data are denoted by payload of a step.

The receiving unit - part of a reader 20 - receives the step signal - sometimes also called chirp signal - of the telemetry unit - part of a tag 10 - and decodes its digital portion. The digital portion of the step 3 contains the value A1, A2, A3, A4 of the amplitude. The minimum value of the amplitude decoded provides an indication of the distance to which the telemetry unit is transmitting the RF signal. In other word: The reader decodes the first understandable step 3 of the sequence to determine the amplitude of the power required by the telemetry unit to be in range of the reader, and therefore can deduct a distance. If the reader is placed at a distance such as the attenuation of the path loss only allows to receive the sequence ..., ..., [A3, D], [A4, D] the reader detects the information that amplitude of transmission A1 and A2 sent by the tag are not enough to cover the path loss brought by the distance and/or scattering effect and multipath loss. Therefore the distance from reader to tag is estimated to be at a reduced distance as compared to if the reader was able to decode the full step function sequence from A1 to A4.

The realization on tag will be described for an active and a passive tag:

i) The case of the active tag is described by a way to implement the digital step transmission, for better understanding, as an example. Other realizations are also possible.

ii) For the case of the passive tag first is given a circuitry according to the state of the art without step transmission. The invention describes a way to implement the step transmission also on a typical UHF passive tag.

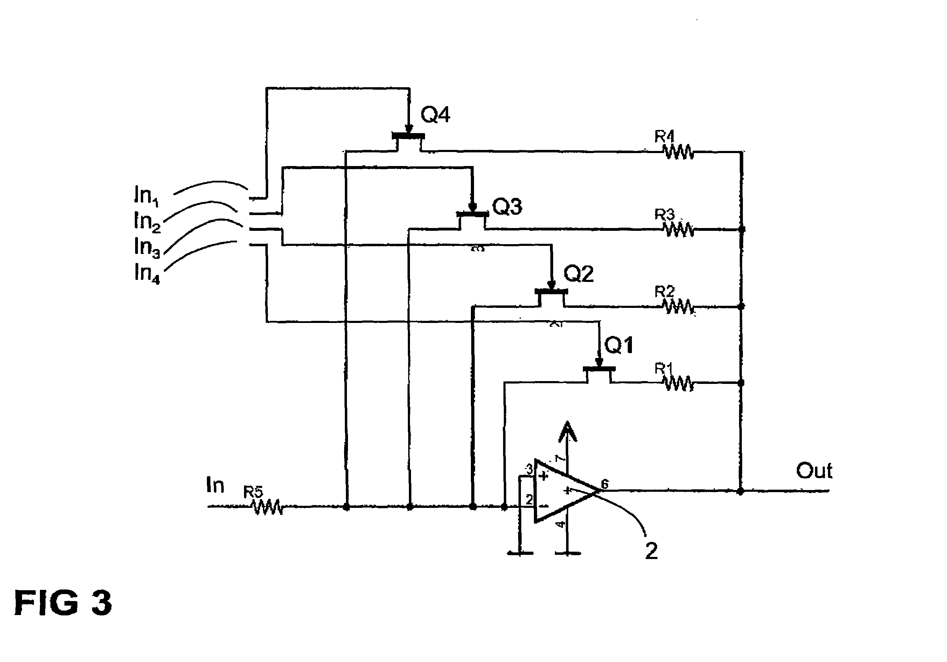

For an active tag - see figure 3 - the telemetry unit is fitted with a power amplifier 2. The gain of the power amplifier 2 is determined by the feed-back loop of the counter-reaction. The value of this counter-reaction can be digitally determined by the combination of the FET transistor Q1, Q2, Q3, Q4 which is switched ON or OFF; this is shown in a simplified representation according to figure 3. The microcontroller unit determines the output power with the combination of $In_1$, $In_2$, $In_3$, $In_4$ switched on or off.

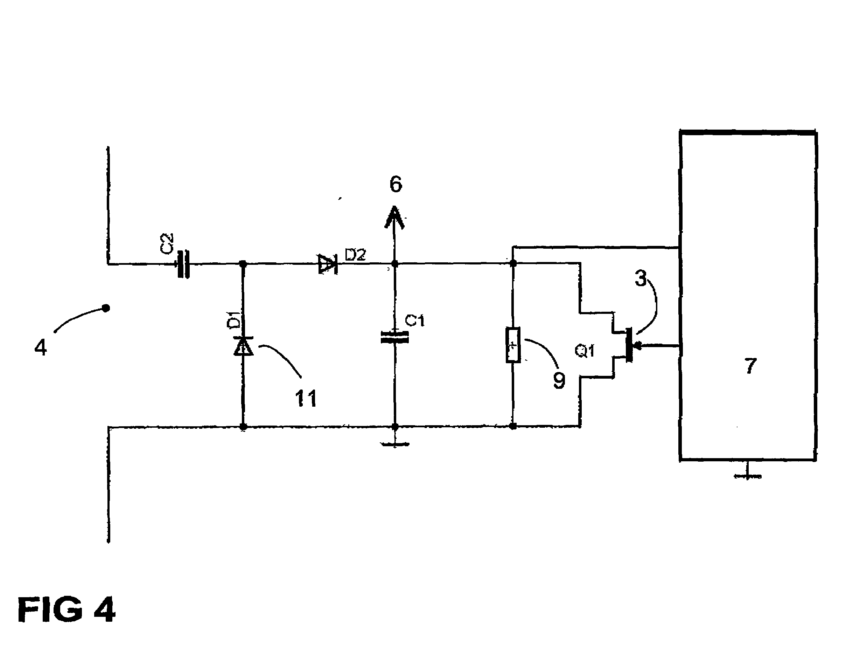

For a passive tag the amplitude of the transmission is based on the amount of RF energy reflected by the antenna 4, details see figure 4. The amount of reflection is a function of the mismatch of impedance done by the modulating transistor during the modulation. The RF energy received on the dipole antenna 4 is rectified by the equivalent charge pump C1,D2,C2,D1 to produce a virtual battery as described in patent application EP 1 645 994 A1 [3]. The virtual battery powers up the logic, which activates the state machine of the tag. Upon decision of this state machine, a modulating message is sent to the transistor Q1. The digital transistor Q1 brings the equivalent of a short circuit to the impedance seen by the antenna 4 at a rate given by the modulation sent by the state machine. For most designs, as the maximum amount of reflection is required, a transistor with very large W/L ratio is used in order to bring an impedance as close as possible to the short circuit during modulation. W/L is the width to length ratio of the transistor. The higher the ratio the higher the current can flow inside the drain of the transistor. The limiter 10 doesn't have any function in this application.

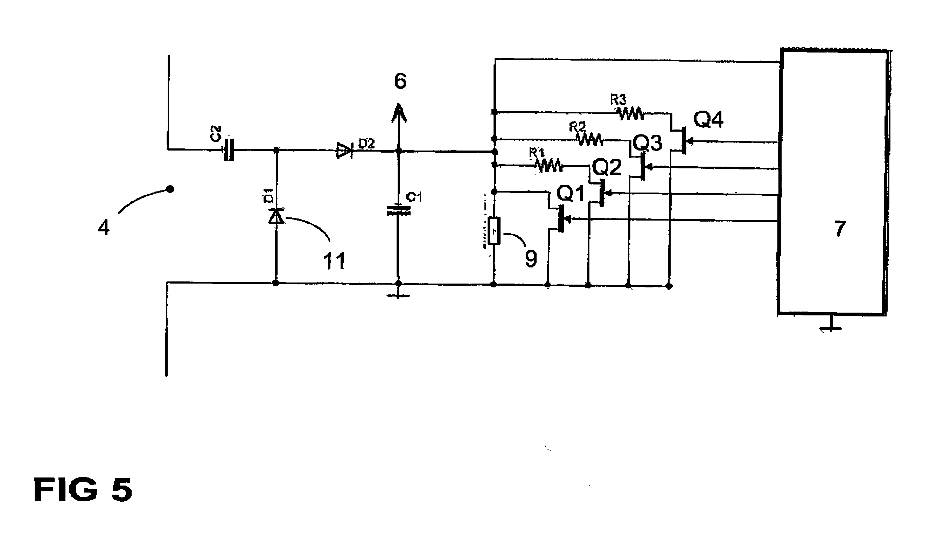

An embodiment of a circuitry carrying out a step transmission according to the invention is depicted in figure 5 for a passive tag. The logic 7 has control over which of the transistor FET to shut during the modulation. The resistors R1, R2, R3 are a typical representation of a single transistor with variation over the W/L ratio. The pair R3-Q4 has higher impedance than the pair R2-Q3, which has higher impedance than the pair R1-Q2, itself having higher impedance than the single Q1. Therefore, the maximum amplitude of reply is given by modulating with all transistors Q1 to Q4 ON. The lowest amplitude of reply is given by modulating Q4 alone. The message of the modulation carries the information of which transistor is used to do the modulation. Transistor Q4 alone is used for modulation of the transmission with lowest backscatter, so it carries the payload [A1, D]. The table below explains the transistor used for modulation and the payload [Ai, D] sent:

Table: Used transistors and corresponding payloads

| Transistor used | Payload |
|---|---|
| Q4 | [A1, D] |
| Q4 and Q3 | [A2, D] |
| Q4 and Q3 and Q2 | [A3, D] |
| Q4 and Q3 and Q2 and Q1 | [A4, D] |

Position detection

The ultimate goal is to have a position indication of the tag, at least on a floorplan represented by coordinates x,y. This information is provided by setting an array of telemetry receivers (readers) on the surface to monitor. Each tag has a unique digital identification number that can also be called a signature.

For simplicity of understanding, only the 2D representation is given here. The application for localization in volume is the same concept, with a 3D array of readers. The position detection in building is strongly affected by the multipath route of the wave. This multipath effect is highly unpredictable, even if some models tend to describe its behaviour, like the Rayleigh model.

The method for determining the x,y - position of the tag is based, at the first order, on the amplitude of power received by each of the three readers. The x,y - coordinate is located at the geometrical center of the three readers A, B, C. This method is described in the literature as the Nearest Neighbor or K-Nearest Neighbor KNN. The reference of the center of all three readers is measured with one tag placed physically at a known place, preferably the center. The instantaneous reception power is measured with a permanent reference tag and is used as a reference for the measurement of the moving tag. Unlike the teachings in the application WO 2004/073343 [2] which describes a probabilistic model to model the terminal's wireless environment, the presence of a permanent low power tag such as disclosed in the European patent application 07002606.7 allows to have a permanent sampling of the characteristics of the wireless environment. This feature is highly important because the characteristics of the wireless environment is tremendously versatile, depending on the presence of materials or people or any items. So in industrial environment it is believed that only a permanent sampling of the wireless environment is adequate.

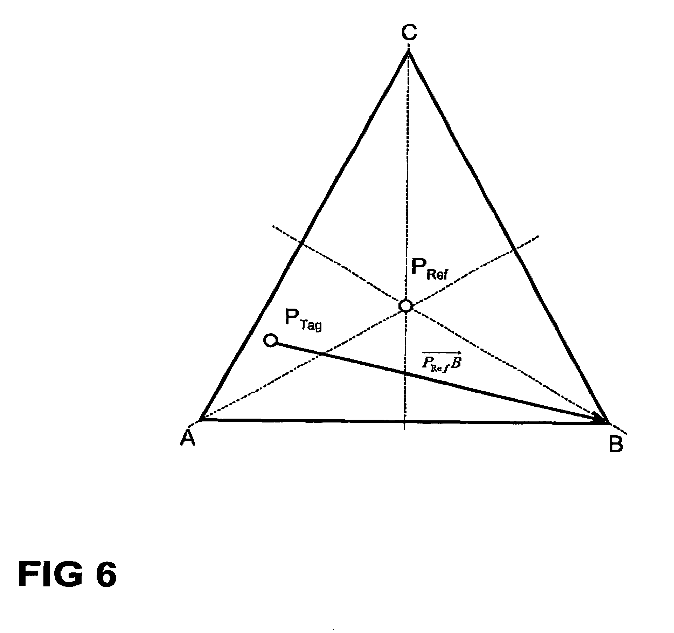

The situation is depicted in figure 6. A minimum of three readers, named A, B, C needs to be in sight of the reference tag $P_{Ref}$. The reference tag is placed at a predetermined position within a confined area, preferably in the center of the three readers, but this is not strictly required. All readers A, B, C are instantly capturing the power of the reference tag $P_{Ref}$. The power measurement of the tag $P_{tag}$ to localize on reader A, B, C is indicated as $\alpha$, $\beta$, $\gamma$. This power measurement is in fact the value indicated by the first power captured by the step sequence, An of the mobile tag. At the same time they are also capturing the power of the tag $P_{tag}$ from which the position is requested. The power measurement of the reference tag $P_{Reg}$ on reader A, B, C is indicated as $\alpha'$, $\beta'$, $\gamma'$, being the first power captured from the step sequence An, where n = 1, 2, ... of the reference tag $P_{REf}$. The difference between the measured position of the reference tag $P_{Ref}$ and its real position gives the offset to determine the exact position of the tag $P_{tag}$ to localize according to the equation:

$$\alpha \cdot \overrightarrow{P_{tag}A} + \beta \cdot \overrightarrow{P_{tag}B} + \gamma \cdot \overrightarrow{P_{tag}C} = -(\alpha' \cdot \overrightarrow{P_{ref}A} + \beta' \cdot \overrightarrow{P_{ref}B} + \gamma' \cdot \overrightarrow{P_{ref}C})$$

In order to have a better precision in the position, especially in logistics environments where the tag $P_{tag}$ is standing still during a long period, the distance measurement can be repeated several times and integrated over the time. Samples of positions can therefore be counted from (1, ..., j). The plot of all the instantaneous samples of power measurement gives an elipsoïde of uncertainty, which can be averaged to provide the user with only one position indication:

$$x = \sum_{J=1}^{k} x_J \quad \text{and} \quad y = \sum_{J=1}^{k} y_j$$

Another way to reduce the uncertainty of measurement is to have more than three readers simultaneously in sight of the same reference tag. The area of the elipsoïde of uncertainty is reduced together with the quantity of readers able to capture the power indication of the tag.

A method to reduce the uncertainty of the position is to confirm the x,y - position calculated with three readers, by adjacent readers. This confirmation by adjacent readers is a very good help to reduce the uncertainty brought by the multipath fading in case the quantity of position samples (1, .., j) is very small.

**List of reference numerals**

1, 1', 1'', 1''''  Step transmission, sequence of steps
2  amplifier
3  portion, step of a frame
4  antenna dipole
5  antenna gain
6  virtual battery
7  logic
8  path loss
9  limiter
10  transmitter
11  C1,D2,C2,D1 peak to peak rectifier
20  receiver
$\alpha$, $\beta$, $\gamma$  Power derived from mobile tag on the respective reader A,B,C
$\alpha$', $\beta$', $\gamma$'  Power derived from reference tag on the respective reader A,B,C
A, B, C  Readers
A1; A2;...; An  coded amplitude of a step sequence
d  distance between transmitting and receiving antenna
D  data, content in a step sequence
f  frequency
KNN  K-Nearest Neighbour
In  signal in
$In_1, In_2, In_3, In_4$  binary coding of input signals
Out  signal out

$\overrightarrow{P\ A}$  vector from the location of a tag to the location of reader

$\overrightarrow{P_{Ref}B}$  vector from the location of a reference tag to the location of a reader

$P_{tag}$  location of a tag
$P_{Ref}$  location of a reference tag
Q1, Q2, Q3, Q4  FET - transistors

**List of symbols**

ISM Industrial, Scientific and Medical; ISM band
RFID Radio Frequency IDentification
RSSI Received Signal Strength Indication

UHF Ultra High Frequency

**References**

[1] WO 1996/028941 A1
«Radio Frequency Identification System for reliable Communication»
Motorola Inc., Schaumburg, IL 60196 US.

[2] WO 2004/073343 A1
«Location applications for wireless networks» MISIKANGAS, Pauli, Helsinki FI-00940.

[3] EP 1 645 994 A1
«Very high frequency passive transponder, in particular a UHF transponder, with a voltage multiplier or booster at the entry of its logic circuit»
EM Microelectronic Marin SA, 2520 Marin Switzerland

**Claims**

1. A method to determine a field strength for a communication between a wireless transceiver device (2) and a plurality of wireless identification tags (1);
   where the wireless transceiver device (2) is called a reader (2) and a wireless identification tag (1) is called a tag (1) which tag (1) sends out messages in form of frames
   **characterised in that**

   i) each frame (1, 1', 1", ..) has the form of an amplitude step function and each step (3) contains the amplitude (A1, ) and data(D) to be transmitted;
   ii) the first decodable step (3) of the sequence received by the reader (2) indicates the amplitude said transmitted step which corresponds to the minimal field strength of reception at that reader (2).

2. Method according to claim 1,
   wherein
   in step ii) from the amplitude in the first decodable step a distance from the tag to the reader is deducted.

3. Method according to claim 1,
   wherein
   in step ii) the distance d from the tag to the reader is calculated via the formulae

$$A = (-27.6) + 20 \cdot \text{Log } f + 20 \cdot \text{Log } d$$

   where

   - A is the free space loss, in [dB];
   - f is the RF frequency in [MHz];
   - d is the distance between the transmitting and receiving antennas in meter [m].

4. Method according to claim 2,
   wherein
   in step ii) the distance d from the tag to the reader is calculated for a RF frequency in the range of 2.4 GHz via the formulae

$$A = 40 + 20 \cdot \text{Log } d$$

where

- A is the free space loss, in [dB];
- d is the distance between the transmitting and receiving antennas in meter [m].

5. Method according to one of the claims 1 to 4 for determining a position of a tag ($P_{tag}$) within a confined area with at least three readers (A, B, C) where the at least three readers (A, B, C) are placed within the area; wherin

a) each reader (A, B, C) determines the field strength with values $\alpha'$, $\beta'$, $\gamma'$ of a reference tag ($P_{Ref}$) placed permanently at a predetermined position within the area defined by the readers (A, B, C)
b) each reader (A, B, C) determines the field strength with values $\alpha$, $\beta$, $\gamma$ of the tag ($P_{tag}$) to be localized;
c) the position of the tag to be localized is determined via the equation:

$$\alpha \cdot \overrightarrow{P_{tag}A} + \beta \cdot \overrightarrow{P_{tag}B} + \gamma \cdot \overrightarrow{P_{tag}C} = -(\alpha' \cdot \overrightarrow{P_{ref}A} + \beta \cdot \overrightarrow{P_{ref}B} + \gamma' \cdot \overrightarrow{P_{ref}C}) \quad (I);$$

where $\overrightarrow{P\ A}$ denotes the vector from a tag ($P_{Ref}$, $P_{tag}$) to a reader (A, B, C).

6. Method according to claim 5
wherein
the steps a) and b) are repeated and the values $\alpha'$, $\beta'$, $\gamma'$, $\alpha$, $\beta$, $\gamma$ are integrated and each integrated value is used in equation (I).

7. Passive tag for sending out messages in form of frames
where each frame (1, 1', 1", ..) has the form of an amplitude step function and each step (3) contains the amplitude (A1, ) and data(D) to be transmitted;
comprising

- the tag has n modulating transistors (Q1, Q2, .. ), where n is the number of steps (3)of the amplitude step function (, $1^1$, ..),
- each modulating transistor (Q1, Q2, .. ) provides a different amplitude of reflection of the via an antenna (4) incoming RF-energy;
- a logic (7) controlling said modulating transistors (Q1, Q2, .. ) in order to send a step (3) with its amplitude (A1, A2, ..) and data (D) to be transmitted.

**FIG 1**

EP 1 973 236 A1

**FIG 2**

FIG 3

FIG 4

FIG 5

EP 1 973 236 A1

**FIG 6**

**European Patent Office**

**EUROPEAN SEARCH REPORT**

Application Number

EP 07 00 5789

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2005/091013 A1 (SYMBOL TECHNOLOGIES INC [US]; BRIDGELALL RAJ [US]; DURON MARK WILLIAM) 29 September 2005 (2005-09-29)<br>* abstract *<br>* paragraphs [0051] - [0053], [0064] *<br>----- | 1,7 | INV.<br>H04B5/02<br>H04B17/00<br>G06K7/00 |
| A | US 6 950 009 B1 (NYSEN PAUL A [US])<br>27 September 2005 (2005-09-27)<br>* abstract *<br>* column 5, line 10 - line 30 *<br>* column 5, line 60 - column 6, line 4 *<br>----- | 1,7 | |
| A | US 2006/114104 A1 (SCARAMOZZINO UMBERTO R [US]) 1 June 2006 (2006-06-01)<br>* abstract *<br>* paragraph [0042] *<br>----- | 1,7 | |
| | | | TECHNICAL FIELDS SEARCHED (IPC)<br><br>H04B<br>G06K |

The present search report has been drawn up for all claims

| Place of search | Date of completion of the search | Examiner |
|---|---|---|
| The Hague | 27 August 2007 | Lustrini, Donato |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 1 973 236 A1

## ANNEX TO THE EUROPEAN SEARCH REPORT
## ON EUROPEAN PATENT APPLICATION NO.

EP 07 00 5789

This annex lists the patent family members relating to the patent documents cited in the above-mentioned European search report.
The members are as contained in the European Patent Office EDP file on
The European Patent Office is in no way liable for these particulars which are merely given for the purpose of information.

27-08-2007

| Patent document cited in search report | | Publication date | Patent family member(s) | | Publication date |
|---|---|---|---|---|---|
| WO 2005091013 | A1 | 29-09-2005 | AU 2005224650 A1<br>CA 2559049 A1<br>EP 1725889 A1<br>US 2005206555 A1 | | 29-09-2005<br>29-09-2005<br>29-11-2006<br>22-09-2005 |
| US 6950009 | B1 | 27-09-2005 | NONE | | |
| US 2006114104 | A1 | 01-06-2006 | AU 2005325688 A1<br>CA 2586196 A1<br>WO 2006080976 A2 | | 03-08-2006<br>03-08-2006<br>03-08-2006 |

EPO FORM P0459

For more details about this annex : see Official Journal of the European Patent Office, No. 12/82

**EP 1 973 236 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 1996028941 A1
- EP 1645994 A1
- WO 2004073343 A
- EP 07002606 A
- WO 2004073343 A1